# EUROPEAN PATENT APPLICATION

(11) **EP 4 374 737 A1**
(43) Date of publication of application: **29.05.2024**
(21) Application number: 23172542.5
(22) Date of filing: 10.05.2023
(51) Int. Cl.: A47B 47/00, A47G 29/087, A47J 47/16

(54) **BASE FOR PLACING GRINDERS**

(30) Priority: 27.11.2022 CN 202223148033 U
(71) Applicant: Zhuhai Kelitong Electronic Co., Ltd., Zhuhai City, Guangdong (CN)
(72) Inventor: SONG, Xiaoxian, Hongqi Town, Jinwan District, Zhuhai City, Guangdong Province (CN); ZHU, Wei, Hongqi Town, Jinwan District, Zhuhai City, Guangdong Province (CN); LUO, Haifeng, Hongqi Town, Jinwan District, Zhuhai City, Guangdong Province (CN)
(74) Representative: Viering, Jentschura & Partner mbB Patent- und Rechtsanwälte

(57) **Abstract**

The present utility model discloses a base for placing grinders comprising an upper shell (1) and a lower shell (2), said upper shell (1) and said lower shell (2) being detachably connected, one or more recesses (3) being provided on one side of said upper shell (1) to place the shell of the grinder, and one or more accommodating compartments (4) being provided on said lower shell (2) to place the bottom of the grinder.

A detachable connection between said upper and lower shells enables said lower shell to be dismantled for cleaning after the grinder has been used for a long time.

## Description

### Technical field

The present utility model generally relates to the technical field of grinders, and in particular to a base for placing grinders.

### Background

For grinders currently available on the market, one contact charging mode is that a charging contact piece is provided at the lower end of the grinder, and a base with a power supply contact piece is provided, so that when the lower of the grinder is placed on the base, the charging contact piece at the lower end of the grinder contacts the power supply contact piece to charge the grinder.

The defect of the prior art is that since the ground material is discharged from the lower end of the grinder, the bottom of the grinder is in contact with the charging base during charging, and dust in the grinder falls onto the charging piece of the charger, so the charging base is contaminated or dust builds up on it.

In addition, the base for placing grinders provided by the prior art is integral, so it is not easy to open the base to clean its inside.

### Summary

The present utility model provides a base for placing grinders, and its key points are as follows: The base comprises an upper shell and a lower shell, said upper and lower shells are detachably connected, one or more recesses are provided on one side of said upper shell to place the shell of the grinder, and one or more accommodating compartments are provided on said lower shell to place the bottom of the grinder.

Further, it comprises a bottom plate, said bottom plate is provided between said upper and lower shells, and a plurality of columns are provided on the upper side of said bottom plate to realize the connection between said bottom plate and the bottom of said upper shell.

Further, one or more arcs are provided on said bottom plate, and their shapes match said one or more recesses and said one or more accommodating compartments to place said grinder.

Further, said one or more arcs, said one or more recesses and said one or more accommodating compartments are of the same number.

Further, fasteners are provided in the lower part of said bottom plate, catching grooves are provided in the upper surface of said lower shell, and said fasteners and said catching grooves form buckle structures.

Further, said one or more arcs, said one or more recesses and said one or more accommodating compartments are of the same number, being two.

Further, the number of said buckle structures is five.

Further, said two arcs are adjacent to each other and form an approximately W-shaped end when put side by side, and a fastener is provided at each endpoint of said approximately W-shaped end.

Further, the positions of said catching grooves correspond to those of said fasteners, so that the positions of said one or more arcs, said one or more recesses and said one or more accommodating compartments are aligned, and the space formed by said one or more arcs, said one or more recesses and said one or more accommodating compartments is used to place the shell of the grinder.

The present utility model realizes the following function: It realizes detachment between the upper and lower shells by dismantling the lower shell after the grinder has been used for a long time to remove or clean the dust in the one or more accommodating compartments or base.

### Brief description of the drawings

Fig. 1 is a schematic diagram of a grinder inserted into the base;
Fig. 2 is an exploded view of the present utility model.

Where: 1) upper shell; 2) lower shell; 3) one or more recesses; 4) one or more accommodating compartments; 5) bottom plate; 6) columns; 7) one or more arcs; 8) fasteners; 9) catching grooves; 10) approximately W-shaped end.

### Detailed description

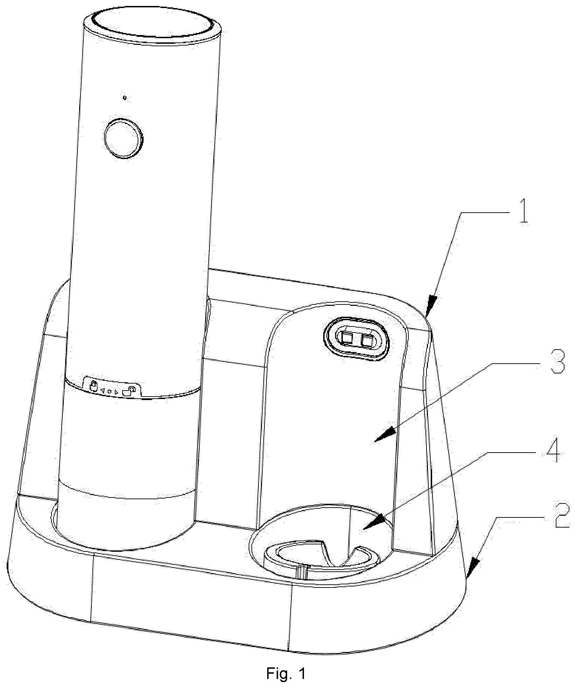

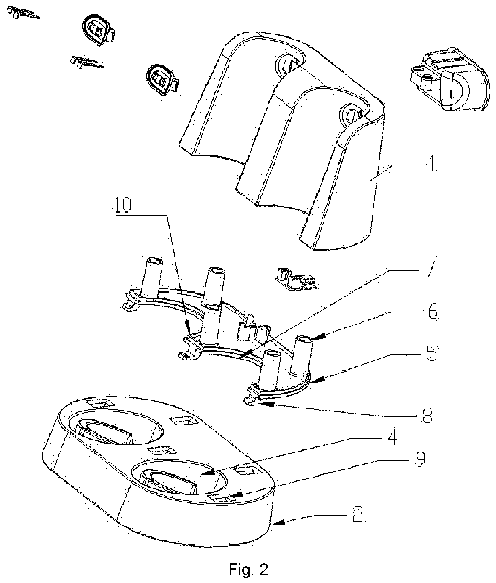

A base for placing grinders as shown in Fig. 1 and Fig. 2 comprises an upper shell 1 and a lower shell 2, wherein the upper shell 1 and the lower shell 2 are detachably connected, and are connected by a buckle in the present embodiment, one or more recesses 3 are provided on one side of the upper shell 1 to place the shell of said grinder, and one or more accommodating compartments 4 are provided on the lower shell 2 to place the bottom of said grinder. A bottom plate 5 is provided between the upper shell 1 and the lower shell 2, and a plurality of columns 6 are provided on the upper side of the bottom plate. A plurality of screws are provided on upper shell 1, and the bottom plate 5 can be connected with the bottom of the upper shell 1 by screw connection by inserting the screws into the columns 6.

Fasteners 8 are provided on the side of the bottom plate 5 close to the lower shell 2, catching grooves 9 are provided on the side of the lower shell 2 close to the bottom plate 5, the ends of the fasteners 8 are inserted into the catching grooves 9, and the fasteners 8 and the catching grooves 9 form buckle structures, realizing a detachable buckle connection between the upper shell 1 and the lower shell 2. Through the detachable connection between the fasteners 8 and the catching grooves 9, a detachable connection is realized between the upper shell 1 and the lower shell 2. Based on the user's need, when dust builds up to a certain extent in the base, the lower shell 2 may be dismantled to remove or clean the dust in the base or one or more accommodating compartments. In addition, the circuit-related structures in the upper shell 1 can be protected from water contact.

Two positions for placing grinders are provided in the present embodiment as follows: one or more arcs 7 for containing grinder shells are provided on the bottom plate 5, where each arc contains one grinder shell. The shape of an arc 7 matches the shapes of the corresponding recess 3 and the corresponding accommodating compartment 4, and they form a space for placing said grinder together.

Fasteners 8 are provided in the lower part of the bottom plate 5, catching grooves 9 are provided in the upper surface of the lower shell 2, and the fasteners 8 can be inserted into the catching grooves 9 to form buckle structures. There are five fasteners 8 and five catching grooves 9 to improve the stability of the buckle connection.

The one or more arcs 7, the one or more recesses 3 and the one or more accommodating compartments 4 are of the same number. In the present embodiment, there are two arcs 7, two recesses 3 and two storage compartments 4, so that one base can place two grinders concurrently. The two arcs 7 are adjacent to each other and form an approximately W-shaped end 10 when put side by side, a fastener 8 is provided at each endpoint of the approximately W-shaped end 10, and the positions of the catching grooves 9 at the lower shell 2 correspond to those of the fasteners 8, so that the positions of the one or more arcs 7, the one or more recesses 3 and the storage compartments 4 are aligned, and the space formed by them can finally place grinder shells.

In addition, the present embodiment provides a charging base that charges electric grinders, wherein charging terminals are provided on one side of the grinder shell, and power supply terminals are provided on one side of the one or more recesses (3), so that when the grinder is placed on said base, the charging and power supply terminals are electrically connected and charge the grinder.

In sum, the present utility model provides a base for placing grinders, wherein the upper shell 1 and the lower shell 2 are detachably connected, and a detachable connection between said upper and lower shells enables said lower shell to be dismantled for cleaning after the grinder has been used for a long time.

## Claims

1. A base for placing grinders, **characterized by** comprising an upper shell (1) and a lower shell (2), said upper shell (1) and said lower shell (2) are detachably connected, one or more recesses (3) are provided on one side of said upper shell (1) to place the shell of the grinder, and one or more accommodating compartments (4) are provided on said lower shell (2) to place the bottom of the grinder.

2. The base for placing grinders according to Claim 1, **characterized in that** it comprises a bottom plate (5), said bottom plate (5) is provided between said upper shell (1) and said lower shell (2), and a plurality of columns (6) are provided on the upper side of said bottom plate (5) to realize the connection between said bottom plate (5) and the bottom of said upper shell (1).

3. The base for placing grinders according to Claim 2, **characterized in that** one or more arcs (7) are provided on said bottom plate (5), and their shapes match said one or more recesses (3) and said one or more accommodating compartments (4) to place said grinder.

4. The base for placing grinders according to Claim 3, **characterized in that** said one or more arcs (7), said one or more recesses (3) and said one or more accommodating compartments (4) are of the same number.

5. The base for placing grinders according to Claim 4, **characterized in that** fasteners (8) are provided in the lower part of said bottom plate (5), catching grooves (9) are provided in the upper surface of said lower shell (2), the ends of said fasteners (8) are inserted into said catching grooves (9), and said fasteners (8) and said catching grooves (9) form buckle structures.

6. The base for placing grinders according to Claim 5, **characterized in that** said one or more arcs (7), said one or more recesses (3) and said one or more accommodating compartments (4) are of the same number, being two.

7. The base for placing grinders according to Claim 6, **characterized in that** the number of said buckle structures is five.

8. The base for placing grinders according to any of Claims 5 to 7, **characterized in that** said two arcs (7) are adjacent to each other and form an approximately W-shaped end (10) when put side by side, and a fastener (8) is provided at each endpoint of said approximately W-shaped end (10).

9. The base for placing grinders according to Claim 8, **characterized in that** the positions of said catching grooves (9) correspond to those of said fasteners (8), so that the positions of said one or more arcs (7), said one or more recesses (3) and said one or more accommodating compartments (4) are aligned, and the space formed by said one or more arcs (7), said one or more recesses (3) and said one or more accommodating compartments (4) is used to place the shell of the grinder.

10. The base for placing grinders according to Claim 9, **characterized in that** charging terminals are provided on one side of the shell of said grinder, and power supply terminals are provided on one side of said one or more recesses (3), so that when said grinder is placed on said base, said charging and power supply terminals are electrically connected and charge said grinder.

## Amended claims

### Amended claims in accordance with Rule 137(2) EPC.

1. A base for placing grinders, comprising an upper shell (1) and a lower shell (2), one or more recesses (3) are provided on one side of said upper shell (1) to place the shell of the grinder, and one or more accommodating compartments (4) are provided on said lower shell (2) to place the bottom of the grinder,
wherein charging terminals are provided on one side of the shell of said grinder, and power supply terminals are provided on one side of said one or more recesses (3), so that when said grinder is placed on said base, said charging and power supply terminals are electrically connected and charge said grinder,
**characterized in that** said upper shell (1) and said lower shell (2) are detachably connected.

2. The base for placing grinders according to Claim 1, **characterized in that** it comprises a bottom plate (5), said bottom plate (5) is provided between said upper shell (1) and said lower shell (2), and a plurality of columns (6) are provided on the upper side of said bottom plate (5) to realize the connection between said bottom plate (5) and the bottom of said upper shell (1).

3. The base for placing grinders according to Claim 2, **characterized in that** one or more arcs (7) are provided on said bottom plate (5), and their shapes match said one or more recesses (3) and said one or more accommodating compartments (4) to place said grinder.

4. The base for placing grinders according to Claim 3, **characterized in that** said one or more arcs (7), said one or more recesses (3) and said one or more accommodating compartments (4) are of the same number.

5. The base for placing grinders according to Claim 4, **characterized in that** fasteners (8) are provided in the lower part of said bottom plate (5), catching grooves (9) are provided in the upper surface of said lower shell (2), the ends of said fasteners (8) are inserted into said catching grooves (9), and said fasteners (8) and said catching grooves (9) form buckle structures.

6. The base for placing grinders according to Claim 5, **characterized in that** said one or more arcs (7), said one or more recesses (3) and said one or more accommodating compartments (4) are of the same number, being two.

7. The base for placing grinders according to Claim 6, **characterized in that** the number of said buckle structures is five.

8. The base for placing grinders according to any of Claims 5 to 7, **characterized in that** said two arcs (7) are adjacent to each other and form an approximately W-shaped end (10) when put side by side, and a fastener (8) is provided at each endpoint of said approximately W-shaped end (10).

9. The base for placing grinders according to Claim 8, **characterized in that** the positions of said catching grooves (9) correspond to those of said fasteners (8), so that the positions of said one or more arcs (7), said one or more recesses (3) and said one or more accommodating compartments (4) are aligned, and the space formed by said one or more arcs (7), said one or more recesses (3) and said one or more accommodating compartments (4) is used to place the shell of the grinder.
